# EUROPÄISCHE PATENTSCHRIFT

(11) **EP 0 283 574 B1**
(45) Veröffentlichungstag und Bekanntmachung des Hinweises auf die Patenterteilung: **31.08.1994**
(21) Anmeldenummer: 87118390.1
(22) Anmeldetag: 11.12.1987
(51) Int. Cl.: F16B 7/10, H01Q 1/12

(54) **Teleskopartig längenveränderliche Einrichtung**
Device with a telescope-like length variation
Dispositif à variation de longueur du type télescopique

(30) Priorität: 14.03.1987 DE 3708326
(43) Veröffentlichungstag der Anmeldung: 28.09.1988
(73) Patentinhaber: DORNIER GMBH, D-88004 Friedrichshafen (DE)
(72) Erfinder: Sauter, Josef, D-7991 Obertreuringen (DE)
(74) Vertreter: Landsmann, Ralf, Dipl.-Ing.

(56) Entgegenhaltungen:
- EP-A- 0 063 783
- CH-A- 58 534
- DE-A- 2 163 766
- DE-B- 2 603 488
- DE-C- 255 261

## Beschreibung

Die Erfindung betrifft teleskopartig längenveränderliche Einrichtungen, beispielsweise Antennenträger, Tragarme oder dergleichen, mit aneinander geführten, relativ gegeneinander in Richtung der Gerätelängsachse verstellbaren Elementen und einer die Elemente verstellenden Vorschubeinrichtung gemäß dem Oberbegriff des Anspruchs 1.

Beispielsweise von Stativen mit längenveränderlichen, rohrförmigen Beinen ist bekannt, die einzelnen Elemente eines Beines von Hand aus ihrer Einfahrstellung herauszuziehen, wobei der Kraftangriff am innersten Element erfolgt. Die Relativbewegung der einzelnen Elemente ist durch Anschläge begrenzt und federnd nachgiebige Rasteinrichtungen fixieren die Elemente in der Endausfahrstellung. Dieser Aufbau erlaubt aber die Festlegung einer bestimmten Ausfahrreihenfolge der einzelnen Elemente zueinander nicht. Es gibt jedoch Anwendungsfälle für Einrichtungen der eingangs angegebenen Art, die eine bestimmte Ausfahrreihenfolge der zusammenwirkenden Elemente erfordern. So kann die Forderung bestehen, daß ausgehend von der Einfahrlage, z.B. von konzentrisch ineinanderliegenden, rohrförmigen Elementen beispielsweise des äusserste Element mit dem in ihm liegenden Paket der übrigen Elemente zuerst in seine Endausfahrstellung und nachfolgend jeweils des benachbarte Element in der Reihenfolge von aussen nach innen ausgefahren wird.

Umgekehrt dazu ist bei einer bereits vorgeschlagenen Ausführung nach der DE-C-26 03 488 für eine teleskopartig längenveränderliche Einrichtung zwingend, den Ausfahrvorgang mit dem innersten Teleskopelement einzuleiten und nachfolgend der Reihenfolge nach von innen nach außen das jeweils benachbarte Element auszufahren.

Die bekannte Einrichtung enthält zur Fixierung der einander benachbarten Elemente und zur Bestimmung der Aus- bzw. Einfahrfolge überdrückbare Rastvorrichtungen mit Federgliedern, wobei die jedem Element zugeordneten Federungen untereinander unterschiedliche Federvorspannungen aufweisen.

Aus der CH-PS 58 534 ist eine dem Oberbegriff des Anspruchs 1 entsprechende Vorrichtung bekannt mit teleskopartig ineinander gelagerten Röhren beliebigen Querschnitts. Dabei wird eine Kupplungs- und Verriegelungsvorrichtung beschrieben mit einem federbelasteten Bolzen mit Querriegel, bei der der Querriegel, über zwei Kurvennutenstücke geführt, den Bolzen zur Kupplung zweier Rohrelemente in eine vorgesehene Bohrung schiebt. Der Kopfteil des Bolzens liegt dabei, durch Bolzenfeder und Ausfahr- oder Einfahrdruck in Gerätelängsachse gezwungen, ständig am nächst innenliegenden Rohrteil an. Das führt in diesem Bereich zu ständiger Reibung, die bei den Kräften, die auf einen hoch ausgefahrenen Masten wirken, bis zur Spanabhebung und zum Festfressen der Teleskopelemente führen kann, was ein Funktionsversagen zur Folge hat. Durch die Verwendung zweier Kurvennutenstücke können bereits leichte Ungenauigkeiten zu Verkantungen des Kupplungsbolzens führen.

Aufgabe der Erfindung ist es, die bisher bekannten Einrichtungen der genannten Art weiter zu entwickeln, eine bestimmte Aus- bzw. Einfahrreihenfolge der Elemente sicherzustellen und gleichzeitig in vorgegebenen Stellungen der Elemente zueinander zwischen den Elementen eine formschlüssige Verriegelung zu bewirken, bei der große Kräfte sicher und zerstörungsfrei gehandhabt werden und die Funktionstüchtigkeit ständig gewährleistet ist.

Die gestellte Aufgabe wird durch die Erfindung nach Anspruch 1 gelöst. Vorteilhafte Ausgestaltungen sind Gegenstände von weiteren Ansprüchen.

Eine so ausgebildete, teleskopartig längenveränderliche Einrichtung ermöglicht eine festgelegte Ausfahrreihenfolge und gleichzeitig eine sichere Verriegelung der Elemente untereinander in bestimmten Stellungen, z.B. in der Ausfahrstellung. Ferner arbeitet die Einrichtung auf einfache Weise selbsttätig in Abhängigkeit von der Relativbewegung der einander benachbarten Elemente.
Die Ausbildung kann sowohl bei Einrichtungen, bei denen die Elemente mit Motorkraft bewegt werden, als auch bei solchen, die mit Handkraft arbeiten, verwendet werden. In der gleichen Weise - wie für den Ausfahrvorgang - kann die erfindungsgemäße Einrichtung auch für den Einfahrvorgang der Elemente nach einer vorbestimmten Einfahrfolge eingesetzt werden.
Als Teleskopelement sind vorzugsweise konzentrisch ineinanderliegend angeordnete Rohrteile, aber auch Elemente in Form von Stäben, Bändern oder dergleichen mit geeigneten Führungen verwendbar.

Beispielshafte Auführungsformen werden nachfolgend anhand von Figuren beschrieben.

Es zeigen:
- Figur 1: schematisiert und längsgeschnitten einen teleskopartig längenveränderlichen Mast, der eine Anzahl ineinanderliegende, rohrförmige Teleskopelemente aufweist,
- Figuren 2A bis 4B: als Seitenansicht und als Draufsicht die Verriegelungsvorrichtung in Abschnitten des Ausfahrvorganges.

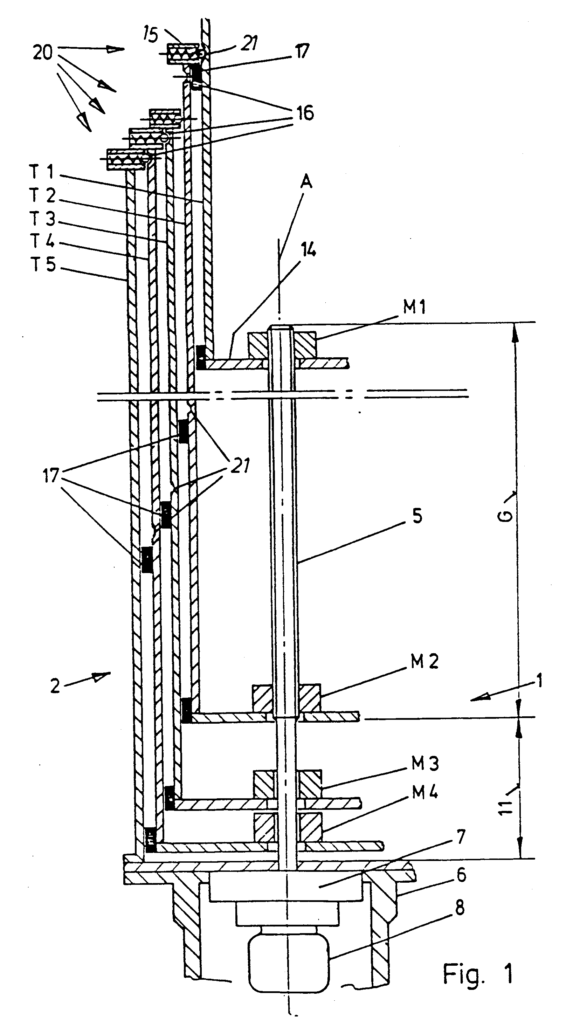

Das in Figur 1 gezeigte Ausführungsbeispiel ist ein teleskopartig längenveränderlicher Mast 2 mit einer Vorschubeinrichtung 1.
Der Mast setzt sich zusammen aus einer Anzahl von konzentrisch ineinanderliegend angeordneten und in Richtung ihrer gemeinsamen Längsachse A relativ gegeneinander verstellbaren, rohrförmigen Elementen T1, T2, T3, T4 und T5. Die Elemente sind durch hier nicht dargestellte Führungen an einer Relativdrehung gegeneinander in jeder axialen Richtung zueinander gesichert.
Die Vorschubeinrichtung 1 besteht aus einer Antriebsspindel 5, die konzentrisch innerhalb der rohrförmigen Elemente T angeordnet und an einer feststehenden Konsole 6 drehbar gelagert ist. Das Lagerende der Spindel ist unter Zwischenschaltung eines Untersetzungsgetriebes 7 an einen Antriebsmotor 8 angeschlossen, der in seiner Drehrichtung umschaltbar ausgebildet ist.

Die Antriebsspindel 5 weist außer ihrem Gewindeabschnitt G im Bereich des Lagerendes einen Magazinabschnitt 11 mit gegenüber dem Gewinde-Kerndurchmesser geringerem Durchmesser zur frei drehbaren Aufnahme von Mutterteilen M2, M3 bzw. M4 auf, was später noch näher erläutert ist. Die Mutterteile M sind jeweils an der unteren Seite der Elemente T über eine Trägerplatte 14 befestigt. In Einfahrstellung des Mastes 2 befinden sich sämtliche Mutterteile M außer Eingriff mit dem Gewinde der Antriebsspindel 5 in konzentrischer Lage zum zylindrischen Abschnitt 11, ausgenommen das Mutterteil M1. Dieses Mutterteil M1 bleibt auch in maximaler Einfahrstellung mit dem Gewinde der Antriebsspindel in Eingriff. Im umgekehrten Falle bleibt in maximaler Ausfahrstellung des Mastes 2 das Mutterteil M4 in Eingriff mit dem Gewinde der Antriebsspindel 5, während alle übrigen Mutterteile außer Eingriff sind.

Die Vorschubeinrichtung 1 arbeitet nach dem Prinzip, daß stets mindestens eines der Muterteile M mit dem Gewinde der Antriebsspindel 5 in Eingriff ist und bevor ein Mutterteil M am oberen oder unteren Ende der Antriebsspindel 5 sich von deren Gewinde abschraubt, das nächstfolgende Mutterteil M mit der Gewindespindel in Eingriff getreten sein muß.
Erfindungsgemäß sind zur Bestimmung der Reihenfolgen des Ausfahrens der Teleskopelemente T bzw. der Sicherung und Fixierung zueinander selbsttätig arbeitende Verriegelungen 20 vorgesehen.
Im Falle der Figur 1 sind es federbelastete Verriegelungselemente 15, die in entsprechende Vertiefungen 16 und 21 der Elemente T eingreifen. Da die Federvorspannung der Verriegelungen 20, ausgehend vom Teleskopelement T2 zum Element T5, zunimmt, wird bei axialer Krafteinwirkung auf Element T1 zunächst die Verriegelung zwischen Element T1 und T2 geöffnet, wodurch sich Element T1 in Bewegung setzt. Die restlichen Elemente bleiben dabei jedoch in Ruhe. Element T1 bewegt sich so lange, bis sein oberer außen angebrachter Führungsring 17 am Gehäuse der Einrichtung 20 von Element T2 anschlägt und versucht, diesen mitzunehmen. Das bewirkt ein Öffnen der Verriegelung zwischen dem Element T2 und Element T3 und gleichzeitig greift das federbelastete Verriegelungselement 15 des Teleskopelementes T2 in die Vertiefung 21 des Teleskopelementes T1 ein, womit eine Verriegelung zwischen den Teleskopelementen T2 und T1 gewährleistet wird, auch nach dem sich die Mutter M1 des Teleskopelementes T1 von der Spindel 5 abgeschraubt hat. Der weitere Ausfahrvorgang erfolgt entsprechend.

Im Folgenden wird demgegenüber eine unterschiedliche Ausführungsform beschrieben, wobei die Ausfahrreihenfolge vom innersten zum äußersten Element T erfolgt.

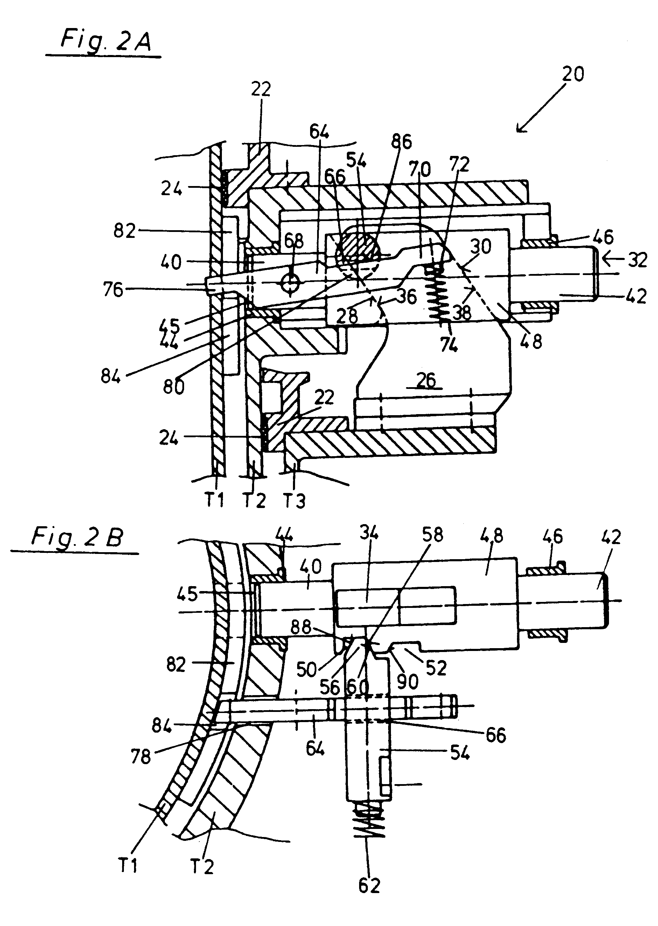

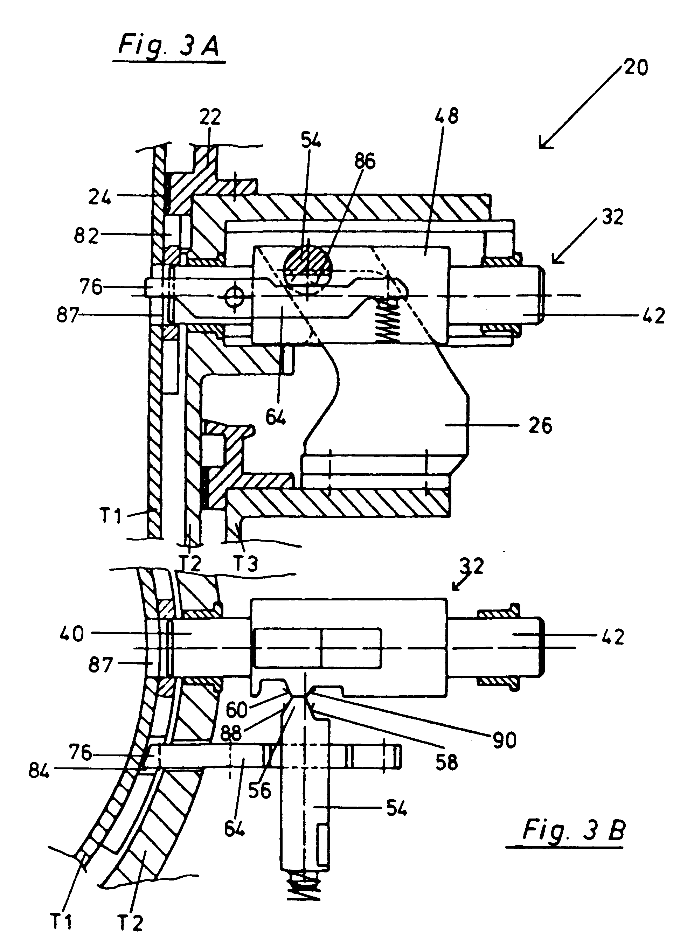

Die Figuren 2 bis 4 stellen die erfindungsgemäße Vorrichtung jeweils in Seitenansicht (A) und in Draufsicht (B) dar. Bei der dargestellten Ausführungsform gemäß der Figuren 2 bis 4 ist vorgesehen, daß aus der Einfahrstellung zuerst das innerste Teleskopelement T1 und der Reihenfolge nach von innen nach außen das Teleskopelement T2 und anschließend das Teleskopelement T3 ausgefahren wird.

Figur 2 zeigt den Aufbau der Verriegelungseinrichtung 20 im eingefahrenen Zustand. Die einzelnen Teleskopelemente T1 bis T3 sind gegeneinander über Anschläge 22 mit Führungs- und Gleiteinrichtungen 24 abgestützt, wobei die Anschläge 22 fest mit den jeweiligen Teleskopelementen verbunden sind. Ein am äußeren dargestellten Teleskopelement T3 befestigtes, beispielsweise verschraubtes, schwertförmiges Metallelement 26 weist an seinem oberen Ende zwei geneigte Anlaufflächen 28 und 30 auf. Dieses Element 26 greift zentral in einem Bolzen 32 ein, der eine Aussparung 34 aufweist, die ebenfalls zwei abgeschrägte Flächen 36 und 38 besitzt. Die beiden mit geringerem Durchmesser ausgestatteten zylindrischen Führungsabschnitte 40 und 42 des Bolzens 32 sind in Führungen 44 und 46 spielfrei gelagert. Zur Aufnahme der Führung 44 weist das Teleskopelement T2 eine Bohrung 45 auf. Im mittleren Teil 48 des Bolzens 32 sind seitlich zwei Einkerbungen 50 und 52 eingearbeitet. Im eingefahrenen Zustand, das heißt bei zurückgezogenem Bolzen 32, liegt ein weiterer Bolzen 54 rechtwinklig zum Bolzen 32 mit seiner Nase 56 in der Einkerbung 50, wobei sich die Nasenflächen 58 der Nase 56 und die Einkerbungsfläche 60 der Einkerbung 50 flächig im Eingriff befinden.
In dieser Stellung gehalten wird der durch ein Federelement 62 belastete Bolzen 54 durch einen Steuerhebel 64. Dazu greift der Steuerhebel 64 in eine Vertiefung 66 im Bolzen 54 ein und verhindert so eine Bewegung in Längsrichtung des Bolzens 54. Der Steuerhebel 64 ist um eine Lagerachse 68 schwenkbar und trägt am längeren Ende 70 eine Aufnahme 72 für ein Federelement 74, das sich am Gehäuse der Vorrichtung 20, hier nicht gezeigt, abstützt. Das kürzere Ende 76 des Steuerhebels 64 ragt durch das Teleskopelement T2 hindurch in den Ausfahrbereich des Teleskopelementes T1 hinein. Dazu befindet sich eine Langlochbohrung 78 in der Wandung des Teleskopelementes T2. Das Ende 76 des Steuerhebels 64 kann zur genaueren Justierung der Auslösung mit einer hier nicht gezeigten Verstellschraube versehen sein. Neben der Vertiefung 66 weist der Bolzen 54 noch eine weitere Vertiefung 80 auf, die aber nur ca. die Hälfte der Tiefe der Vertiefung 66 erreicht. Mit den beiden Vertiefungen 66 und 80 des Bolzens 54 gelangt die Kontaktfläche 86 des Steuerhebels 64 in den verschiedenen Abschnitten des Verriegelungsvorganges in Eingriff.

Am Teleskopelement T1 sind zwei Anschläge 82 und 84 so im Abstand voneinander angeordnet, daß gleichzeitig der Anschlag 82 des Teleskopelementes T1 den Anschlag 22 des Teleskopelementes T2 und der Anschlag 84 des Elementes T1 das Ende 76 des Steuerhebels 64 erreicht.

Die Figuren 2 bis 4 zeigen die Wirkungsweise der gezeigten Verriegelungseinrichtung 20. Der Ablauf gestaltet sich so, daß der Anschlag 82 des Teleskopelementes T1, bevor sich das zugehörige Mutterteil M1 von der Antriebsspindel 5 am oberen Ende abschraubt, den Anschlag 22 des Teleskopelementes T2 erreicht und die beiden Anschläge in Anlage miteinander gelangen. Gleichzeitig erreicht der Anschlag 84 des Teleskopelementes T1 das Ende 76 des Steuerhebels 64 und drückt diesen Steuerhebel 64 gegen das Federelement 74 in Ausfahrrichtung. Bis zu diesem Zeitpunkt liegt der Steuerhebel 64, durch das Federelement 74 in eine leichte Neigung um die Lagerachse 68 gegen die Ausfahrrichtung gebracht, mit seiner Kontaktfläche 86 in der tieferen Vertiefung 66. Dabei liegt der Bolzen 54 mit seiner Nase 56 in der Einkerbung 50 des Bolzens 32, wobei die Nasenfläche 58 der Nase 56 und die Fläche 60 der Einkerbung 50 aneinander anliegen. Damit hat der Bolzen 32 keine Möglichkeit, sich senkrecht zur Teleskopelementenlängsachse zu verschieben, da die Anlaufflächen 36 und 38 des Bolzens 32 und die Anlaufflächen 28 und 30 des Metallschwertes 26 fest miteinander in Eingriff bleiben. Eine Lösung der Teleskopelemente T2 und T3 ist also nur dann möglich, wenn der Bolzen 32 eine Verstellmöglichkeit senkrecht zur Teleskopelementenlängsachse besitzt. Bis zur Öffnung des Steuerhebels 64 ist somit eine feste Verbindung zwischen Teleskopelement T2 und T3 gewährleistet und die korrekte Ausfahrreihenfolge ist garantiert, da die nachfolgenden Elemente erst nach Öffnung des Steuerhebels 64, die aber erst nach vollständiger Ausfahrt des vorhergehenden Elementes T1 geschieht, ausgefahren werden können.

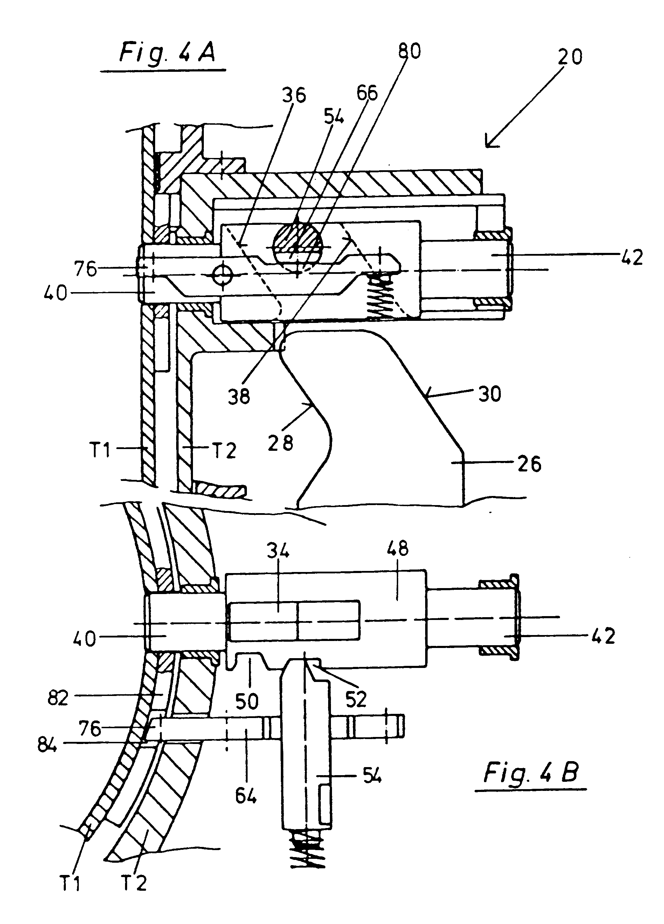

Erreicht jetzt Anschlag 82 des Teleskopelementes T1 den Anschlag 22 des Elementes T2 und Anschlag 84 des Elementes T1 das Ende 76 des Steuerhebels 64, so wird der Steuerhebel 64 gegen das Federelement 74 um die Lagerachse 68 in Längsrichtung bewegt und in eine waagerechte Position gebracht. Dadurch ist der Bolzen 54 entriegelt und es findet eine Entriegelung des Bolzens 32 ebenfalls statt. Durch die Mitnahme des Teleskopelementes T2 durch die Anschläge 82 und 22 in Ausfahrrichtung drücken die Anlaufflächen 28 und 30 des Schwertes 26 den Bolzen 32 über dessen Anlaufflächen 36 und 38 senkrecht zur Teleskopelementenlängsachse. Dabei gelangt der zylindrische Teil 40 des Bolzens 32 durch die Führung 44 des Teleskopelementes T2 hindurch in die Aussparung 87 des Teleskopelementes T1 und verriegelt die Elemente T1 und T2 sicher miteinander. Die Aussparung 87 kann gegebenenfalls durch eine eingearbeitete Hülse verstärkt sein. Bei der Vorwärtsbewegung des Bolzens 32 wird der Bolzen 54 über seine Nasenfläche 58 von der Einkerbungsfläche 60 der Einkerbung 50 gegen das Federelement 62 gedrückt. Dabei kommt die Kontaktfläche 86 des Steuerhebels 64 mit der Vertiefung 80 in Eingriff, die nicht so tief ist wie die Vertiefung 66, wodurch der Steuerhebel 64 in seiner waagerechten Stellung gehalten wird und nicht wieder verriegeln kann.
Wie aus Figur 4 ersichtlich, hat nach abgeschlossenem Verriegelungsvorgang der zylindrische Teil 40 des Bolzen 32 eine sichere Verbindung zwischen Teleskopelement T1 und Element T2 geschaffen, wonach sich anschließend das Mutterteil M2 des Teleskopelementes T2 auf die Spindel 5 aufzuschrauben vermag und die Mutter M1 des Elementes T1 die Spindel 5 verlassen kann. Eine weitere Nasenfläche 88 der Nase 56 steht dann im ausgefahrenen Zustand im Eingriff mit der Einkerbungsfläche 90 der Einkerbung 52 des Bolzens 32. Die Nasenflächen 58 und 88 und die Einkerbungsflächen 60 und 90 können einen Neigungswinkel von ca. 20° bis 24° zur Längsachse des Bolzens 54 einnehmen. Vorzugsweise ist ein Winkel von 22° zu verwenden, da der Einfluß der Selbsthemmung der ineinander eingreifenden Teile bei diesem Winkel am geringsten ist.

Der Einfahrvorgang vollzieht sich entsprechend. Zunächst fädelt die Mutter M1 wieder oben auf die Spindel auf. Dann schiebt das Schwert 26 über die Flächen 28 und 30 den Bolzen 32 über die Flächen 36 und 38 aus der Aussparung 87 heraus, wobei gleichzeitig der Bolzen 54 über die Nasenfläche 88 der Nase 56 und über die Einkerbungsfläche 90 der Einkerbung 52 gegen das Federelement 62 zurückgedrückt wird. Der Bolzen 32 wird weiter zurückgeführt und entriegelt die Teleskopelemente T1 und T2. Die Nase 56 des Bolzen 54 kann in die Einkerbung 50 gelangen, wobei die Nasenfläche 58 und die Einkerbungsfläche 60 sich wieder aneinander anlegen. Der Steuerhebel 64 wird durch das Federelement 74 in die Vertiefung 66 gedrückt und mnimmt seine geneigte Stellung ein. Damit sind die Teleskopelemente T2 und T3 erneut miteinander fest verriegelt. Bei weiterer Abwärtsbewegung von Teleskopelement T1 verlässt die Mutter M2 des Teleskopelements T2 die Spindel 5 am unteren Ende und gelangt in den gewindefreien Raum 11. In der gleichen Weise arbeiten auch die weiteren Elemente und Verriegelungen zusammen, wobei die Ausführung nicht auf die Anzahl der hier dargestellten drei Teleskopelemente beschränkt ist, sondern es möglich ist, eine große Anzahl solcher Teleskopelemente mit entsprechenden Verriegelungsvorrichtungen 20 zu verwenden.

## Patentansprüche

1. Teleskopartig längenveränderliche Einrichtung, beispielsweise Antennenträger, Tragarm oder dergleichen, mit aneinander geführten, relativ gegeneinander in Richtung der Gerätelängsachse in festgelegter Reihenfolge verstellbaren Elementen, einer die Elemente verstellenden Vorschubeinrichtung und einer Ausfahr- und Betriebsverriegelungseinrichtung, wobei
- je zwei einander benachbarte Elemente (T2, T3) zusammenwirkende Glieder (26, 32) der Verriegelungseinrichtung (20) tragen,
- die Verriegelungseinrichtung (20) ein bewegliches Verriegelungsglied (32) mit Führungsabschnitten (40, 42) enthält, das in eine Aussparung (87) eines weiteren nächst innenliegenden Elementes (T1) eingreifen kann,
- eines der zusammenwirkenden Glieder der Verriegelungseinrichtung (20) durch das Verriegelungsglied (32) gebildet wird, das durch ein anderes (26) der zusammenwirkenden Glieder, das auf dem benachbarten Element angebracht ist, betätigt wird, wobei beide Glieder (26, 32) sich hintergreifend ineinander eingreifen,
dadurch gekennzeichnet, daß
- die Verriegelungseinrichtung (20) einen Bolzen (54) aufweist, der mit einer Nase (56) versehen ist, die in Einkerbungen (50, 52) des Verriegelungsgliedes (32) eingreift und
- ein Steuerhebel (64) vorgesehen ist, der in den Bolzen (54) in Vertiefungen (66, 80) eingreift, um diesen zu sperren, wobei eine feste Verriegelung zwischen den beiden zusammenwirkenden Gliedern (32, 26) hergestellt werden kann.

2. Einrichtung nach Anspruch 1, dadurch gekennzeichnet, daß das jeweils gegenüber den noch verriegelten Elementen (T) axial frei verstellbare Element (T₁) wenigstens einen Anschlag (82) aufweist zur Mitnahme des in der Ausfahrreihenfolge nachfolgenden Elementes (T₂) über dessen Anschlag (22) und ein weiterer Anschlag (84) vorgesehen ist zur Betätigung des Steuerhebels (64) im Sinne einer Entriegelung.

3. Einrichtung nach Ansprüchen 1 oder 2, dadurch gekennzeichnet, daß das jeweils gegenüber dem axial relativ beweglichen Element (T₂) nächstliegende äußere Element (T₃) ein festes Bauteil (26) mit abgeschrägten Seitenflächen (28, 30) aufweist zur Betätigung des Verriegelungsgliedes (32) des benachbarten innenliegenden Elementes (T).

4. Einrichtung nach einem der vorherigen Ansprüche, dadurch gekennzeichnet, daß das Verriegelungsglied (32) eine zentrale Aussparung (34) aufweist, in der zwei Schaltflächen (36, 38) vorgesehen sind, die gleiche Schrägungswinkel haben, wie die Flächen (28, 30) des Bauteils (26).

5. Einrichtung nach einem der vorherigen Ansprüche, dadurch gekennzeichnet, daß die sich in dem senkrecht zur Teleskopelementenlängsachse verstellbaren Verriegelungsgliedes (32) befindlichen Einkerbungen (50, 52) abgeschrägte Randflächen (60, 90) aufweisen, in die die abgeschrägten Nasenflächen (58, 88) der Nase (56) des Bolzens (54) eingreifen.

6. Einrichtung nach Anspruch 5, dadurch gekennzeichnet, daß der Schrägungswinkel zwischen den Flächen (58, 60, 88, 90) und der Längsachse des Bolzens (54) zwischen 20° und 24° liegt.

7. Einrichtung nach Anspruch 6, dadurch gekennzeichnet, daß der Schrägungswinkel zwischen den Flächen (58, 60, 88, 90) und der Längsachse des Bolzens (54) annähernd 22° beträgt.

8. Einrichtung nach einem der vorherigen Ansprüche, dadurch gekennzeichnet, daß der Bolzen (54) durch ein Federelement (62) in Richtung des Verriegelungsgliedes (32) belastet ist.

9. Einrichtung nach einem der vorherigen Ansprüche, dadurch gekennzeichnet, daß der Steuerhebel (64) um eine Lagerachse (68) schwenkbar und durch ein Federelement (74) in den Vertiefungen (66, 80) des Bolzens (54) gehalten ist.

10. Einrichtung nach einem der vorherigen Ansprüche, dadurch gekennzeichnet, daß die Führungsabschnitte (40, 42) des Verriegelungsgliedes (32) in Führungen (44, 46) gelagert sind.

11. Einrichtung nach einem der vorherigen Ansprüche, dadurch gekennzeichnet, daß in dem die Verriegelungsvorrichtung (20) tragenden Teleskopelement (T) eine Bohrung (45) zur Aufnahme der Führung (44) und ein Langloch (78) zur Durchführung des Endes (76) des Steuerhebels (64) vorgesehen ist.

12. Einrichtung nach einem der vorherigen Ansprüche, dadurch gekennzeichnet, daß in die Aussparung (87) eine verstärkende Hülse eingearbeitet ist.

13. Einrichtung nach einem der vorherigen Ansprüche, dadurch gekennzeichnet, daß an den Anschlägen (22) Führungs- und Gleiteinrichtungen (24) vorgesehen sind.

14. Einrichtung nach einem der vorherigen Ansprüche, dadurch gekennzeichnet, daß am Ende (76) des Steuerhebels (64) eine Verstellschraube zur Feineinstellung vorgesehen ist.

## Claims

1. Device with a telescope-like length variation, for example an antennae carrier, supporting arms or the like, with elements which are guided with respect to one another in the direction of the longitudinal axis of the device and in a set sequence, a feed device displacing the elements, and a feed and operating locking device; wherein
- two elements (T2, T3) adjacent one another carry, in each case, cooperating members (26, 32) of the locking device (20);
- the locking device (20) contains a movable locking member (32) with guide sections (40, 42), which can engage in a recess (87) of a further element (T1) that lies next in an inward direction;
- one of the cooperating members of the locking device (20) is formed by the locking member (32), which is actuated by another (26) of the cooperating members, which is mounted on the adjacent element, wherein both members (26, 32) engage into one another from the rear;
characterised in that
- the locking device (20) comprises a pin (54), which is provided with a nose (56) which engages in notches (50, 52) of the locking member (32); and
- a control lever (64) is provided, which engages in the pins (54) in recesses (66, 80), in order to lock these, wherein a fixed locking can be produced between the two cooperating members (32, 26).

2. Device according to Claim 1, characterised in that the element (T₁) which is, in each case, axially freely displaceable in relation to the elements (T) which are still locked, comprises at least one abutment stop (82) to entrain the element (T₂) that follows it in the order of extension via the abutment stop (22) thereof, and a further abutment stop (84) is provided for the actuation of the control lever (64) in the direction of unlocking.

3. Device according to Claim 1 or Claim 2, characterised in that the element (T₃) which lies, in each case, in an outward direction, next to the element (T₂) which is axially relatively movable, comprises a fixed component (26) with chamfered lateral surfaces (28, 30) for the actuation of the locking member (32) of the element (T) which lies next to it in an inward direction.

4. Device according to any one of the preceding claims, characterised in that the locking member (32) comprises a central recess (34), in which two shift surfaces (36, 38) are provided, which have the same angle of bevel as the surfaces (28, 30) of the component (26).

5. Device according to any one of the preceding claims, characterised in that the notches (50, 52) located in the locking member (32) that is displaceable perpendicular to the longitudinal axis of the telescope elements comprise bevelled edge surfaces (60, 90), into which the bevelled nose surfaces (58, 88) of the nose (56) of the pin (54) engage.

6. Device according to Claim 5, characterised in that the angle of bevel between the surfaces (58, 60, 88, 90) and the longitudinal axis of the pin (54) is between 20° and 24°.

7. Device according to Claim 6, characterised in that the angle of bevel between the surfaces (58, 60, 88, 90) and the longitudinal axis of the pin (54) is approximately 22°.

8. Device according to any one of the preceding claims, characterised in that the pin (54) is urged by a spring element (26) in the direction of the locking member (32).

9. Device according to any one of the preceding claims, characterised in that the control lever (64) is pivotable about a longitudinal axis (68) and is retained in the recesses (66, 80) of the pin (54) by means of a spring element (74).

10. Device according to any one of the preceding claims, characterised in that the guide sections (40, 42) of the locking member (32) are mounted in guides (44, 46).

11. Device according to any one of the preceding claims, characterised in that there is provided, in the telescope element (T) supporting the locking element (20), a bore (45) for accommodating the guide (44) and a longitudinal hole (78) for the end (76) of the control lever (64) to pass through.

12. Device according to any one of the preceding claims, characterised in that a reinforcing sleeve is incorporated in the recess (87).

13. Device according to any one of the preceding claims, characterised in that guide and slide devices (24) are provided on the abutment stops (22).

14. Device according to any one of the preceding claims, characterised in that a setting screw for fine adjustment is provided on the end (76) of the control lever (64).

## Revendications

1. Dispositif à variation de longueur de type télescopique, par exemple support d'antenne, bras de support ou analogue, comprenant des éléments guidés les uns sur les autres et déplaçables les uns par rapport aux autres, dans un ordre déterminé, dans le sens de l'axe longitudinal de l'appareil, un dispositif d'avancement des éléments à déplacer, et un dispositif de sortie et de verrouillage en état de fonctionnement, dans lequel
- respectivement deux éléments voisins (T2, T3) portent des organes (26, 32) du dispositif de verrouillage (20) coopérant l'un avec l'autre,
- le dispositif de verrouillage (20) comporte un organe de verrouillage (32) mobile avec des sections de guidage (40, 42), qui peut s'engager dans un évidement (87) d'un autre élément (T1) voisin situé à l'intérieur,
- l'un des organes coopérants du dispositif de verrouillage (20) est constitué par l'organe de verrouillage (32) qui est actionné par un autre (26) desdits organes coopérants lequel est monté sur l'élément voisin, les deux organes (26, 32) venant en prise en passant l'un derrière l'autre,
caractérisé en ce que
- le dispositif de verrouillage (20) comprend une broche (54) munie d'un talon (56) qui s'engage dans des entailles (50, 52) de l'organe de verrouillage (32), et que
- un levier de commande (64) qui s'engage dans des creux (66, 80) ménagés dans la broche (54) est prévu pour bloquer ladite broche, ce qui permet de réaliser un verrouillage solide entre les deux organes (32, 26) coopérant l'un avec l'autre.

2. Dispositif selon la revendication 1, caractérisé en ce que l'élément (T1) pouvant être déplacé librement dans le sens axial par rapport aux éléments (T) encore verrouillés, comprend au moins une butée (82) pour l'entraînement de l'élément (T2) consécutif dans l'ordre de sortie par l'intermédiaire de la butée (22) de celui-ci, et qu'il est prévu une butée (84) supplémentaire pour actionner le levier de commande (64) dans le sens d'un déverrouillage.

3. Dispositif selon l'une des revendications 1 ou 2, caractérisé en ce que l'élément extérieur (T3) situé respectivement le plus près de l'élément (T2) relativement mobile dans le sens axial, comprend un élément fixe (26) avec des surfaces latérales (28, 30) inclinées, qui est destiné à actionner l'organe de verrouillage (32) de l'élément (T) voisin situé à l'intérieur.

4. Dispositif selon l'une des revendications précédentes, caractérisé en ce que l'organe de verrouillage (32) présente un évidement central (34) dans lequel sont prévues deux surfaces de commande (36, 38) dont les angles d'inclinaison sont identiques à ceux des surfaces (28, 30) de l'élément (26).

5. Dispositif selon l'une des revendications précédentes, caractérisé en ce que les entailles (50, 52) ménagées dans l'organe de verrouillage (32) déplaçable perpendiculairement à l'axe longitudinal des éléments télescopiques présentent des surfaces latérales (60, 90) inclinées dans lesquelles s'engagent les surfaces inclinées (58, 88) du talon (56) de la broche (54).

6. Dispositif selon la revendication 5, caractérisé en ce que l'angle d'inclinaison entre les surfaces (58, 60, 88, 90) et l'axe longitudinal de la broche (54) est compris entre 20° et 24°.

7. Dispositif selon la revendication 6, caractérisé en ce que l'angle d'inclinaison entre les surfaces (58, 60, 88, 90) et l'axe longitudinal de la broche (54) est sensiblement égal à 22°.

8. Dispositif selon l'une des revendications précédentes, caractérisé en ce que la broche (54) est sollicitée par un élément de ressort (62) en direction de l'organe de verrouillage (32).

9. Dispositif selon l'une des revendications précédentes, caractérisé en ce que le levier de commande (64) peut pivoter autour d'un axe de palier (68) et est maintenu dans les creux (66, 80) de la broche (54) par un élément de ressort (74).

10. Dispositif selon l'une des revendications précédentes, caractérisé en ce que les sections de guidage (40, 42) de l'organe de verrouillage (32) sont montées dans des guidages (44, 46).

11. Dispositif selon l'une des revendications précédentes, caractérisé en ce que dans l'élément télescopique (T) portant le dispositif de verrouillage (20) est ménagé un alésage (45) destiné à recevoir le guidage (44), et un trou oblong (78) pour le passage de l'extrémité (76) du levier de commande (64).

12. Dispositif selon l'une des revendications précédentes, caractérisé en ce que dans l'évidement (87) est enfoncée une douille de renfort.

13. Dispositif selon l'une des revendications précédentes, caractérisé en ce que des systèmes de guidage et de glissement (24) sont prévus sur les butées (22).

14. Dispositif selon l'une des revendications précédentes, caractérisé en ce qu'à l'extrémité (76) du levier de commande (64) est prévue une vis de réglage pour le réglage précis.
